# EUROPÄISCHE PATENTSCHRIFT

(11) **EP 1 712 892 B1**
(45) Veröffentlichungstag und Bekanntmachung des Hinweises auf die Patenterteilung: **10.12.2008**
(21) Anmeldenummer: 06090055.2
(22) Anmeldetag: 11.04.2006
(51) Int. Cl.: G01N 13/14

(54) **Nahfeldoptik für elektromagnetische Strahlung im infraroten Spektralbereich**
Near field optics for electromagnetic radiation in the infrared spectrum
Optique de champ proche pour radiation électromagnétique dans le domain spectrale de l'infrarouge

(30) Priorität: 11.04.2005 DE 102005017676
(43) Veröffentlichungstag der Anmeldung: 18.10.2006
(73) Patentinhaber: Berliner Elektronenspeicherring-Gesellschaft für Synchrotronstrahlung mbH, 12489 Berlin (DE); Technische Universität Dresden, 01069 Dresden (DE)
(72) Erfinder: Holldack, Karsten, 13086 Berlin (DE); Rudolph, Ivo, 10439 Berlin (DE); Schade, Ulrich, 12625 Waldesruh (DE); Schondelmaier, Daniel, 12489 Berlin (DE); Staats, Gerald, 01217 Dresden (DE)
(74) Vertreter: Rudolph, Margit

(56) Entgegenhaltungen:
- EP-A- 0 367 267
- EP-A- 1 211 504
- ROSNER B T ET AL: "HIGH-FREQUENCY NEAR-FIELD MICROSCOPY" REVIEW OF SCIENTIFIC INSTRUMENTS, AIP, MELVILLE, NY, US, Bd. 73, Nr. 7, Juli 2002 (2002-07), Seiten 2505-2525, XP001132401 ISSN: 0034-6748
- FISCHER U C ET AL: "The concept of a coaxial tip as a probe for scanning near field optical microscopy and steps towards a realisation" ULTRAMICROSCOPY NETHERLANDS, Bd. 42-44, Juli 1992 (1992-07), Seiten 393-398, XP002463423 ISSN: 0304-3991

## Beschreibung

Die Erfindung bezieht sich auf eine Nahfeldoptik für elektromagnetische Strahlung im infraroten Spektralbereich mit einem metallischen Hohlraumwellenleiter vorgegebenen Querschnitts mit einer großen Eingangsapertur, deren Durchmesser die freie Ausbreitung der Strahlung erlaubt, und einer kleinen Ausgangsapertur, deren Durchmesser die freie Ausbreitung der Strahlung durch cut-off Verhalten verhindert, und einer im Hohlraumwellenleiter mit einem Dielektrikum fixierten Fokussierungseinrichtung, die im Eingangsbereich des metallischen Hohlraumwellenleiters als Antenne und in dessen Ausgangsbereich als Wellenleiter ausgebildet ist.

Optische Nahfelder mit einer räumlichen Ausdehnung der Intensität der Strahlung wesentlich unterhalb ihrer Wellenlänge treten in der Nähe jedes beleuchteten Objekts auf. Sie werden durch die Wechselwirkung der beleuchteten Materie mit dem einfallenden elektromagnetischen Feld erzeugt und fallen innerhalb typischer Abstände, die ungefähr der Wellenlänge entsprechen, von der Materie stark ab. Für die Materialforschung im Strukturbereich kann breitbandige Infrarotstrahlung im THz- und Sub-THz-Bereich mit der zu untersuchenden Materie in Wechselwirkung treten. Durch Absorption der Strahlungsleistung verändert sich die Materie nachweisbar und charakteristisch. Möglich ist beispielsweise das Verschmelzen von biologischen Geweben oder die Modifizierung der Sekundär- und Ternärstruktur von Proteinen. Eine andere Anwendung ist die Nahfeldspektroskopie (auch quasioptische Nahfeldspektroskopie im Frequenzbereich von 30 GHz bis 1,5 THz) als bildgebendes Verfahren für die laterale Verteilung der chemischen und strukturellen Eigenschaften entsprechend untersuchter Materieobjekte. Die optische Nahfeldmikroskopie (Scanning Near-field Optical Microscopy - SNOM) erlaubt die Abbildung von wesentlich kleineren Strukturen, als es mit konventionellen Mikroskopen möglich ist. Simultan zur Objekttopographie können damit optische Eigenschaften von Mikro- und sogar Nanostrukturen unterhalb von 10 nm durch Beobachtung der Nahfeldwechselwirkung zwischen Mikroskopsonde und Probe erfasst werden. Die Auflösung in der konventionellen optischen Mikroskopie ist durch Beugungseffekte auf rund die Hälfte ihrer Strahlungswellenlänge begrenzt. Diese Grenze kann durch die optische Nahfeldmikroskopie unter anderem dadurch überwunden werden, indem das Licht durch eine sehr kleine Blende (Apertur) auf die Probe gelenkt wird. Hinter der Blende entsteht eine evaneszente Welle, deren Intensität mit dem Abstand in der Größenordnung der Wellenlänge exponentiell abklingt und das Nahfeld ausbildet. Durch Rastern der Blende entsteht ein Bild mit sehr hoher Ortsauflösung. Einsatzgebiete der Nahfeldmikroskopie eröffnen sich beispielsweise mit der Untersuchung von Einflüssen optischer Nahfeldeffekte in der Mikrostrukturmesstechnik oder- kombiniert mit spektroskopischen Techniken - der Untersuchung der Materialzusammensetzung von submikroskopischen Strukturen. Letzteres ist für viele Fragestellungen in der Halbleitertechnologie sowie Biologie und Medizin von großer Bedeutung.

Für alle genannten Anwendungen ist es erforderlich, die Intensität der verwendeten Strahlung durch die Apertur auf einen sehr kleinen Bereich zu fokussieren. Dazu wird eine Nahfeldoptik (auch Nahfeldsonde) verwendet, die mit einem trichterförmigen Hohlraumwellenleiter die Strahlung der Strahlungsquelle auf der Eingangsseite mit einer großen Eingangsapertur einfängt, fokussiert und auf der Ausgangsseite mit einer kleinen Ausgangsapertur in einem Abstand innerhalb der Reichweite des Nahfeldes über die Probenoberfläche bewegt. Dabei ist die Auflösung im Wesentlichen durch die Geometrie der Nahfeldoptik und nicht durch die Strahlungswellenlänge gegeben. Für empfindliche und reproduzierbare Messungen ist die Bereitstellung von Nahfeldoptiken mit gut definierter Geometrie bei hoher Strahlungstransmission und Fokussierungsgrad notwendig.

### Stand der Technik

Aus dem Stand der Technik sind verschiedene Nahfeldoptiken bekannt. So wird in der DE 42 44 268 A1 eine Nahfeldoptik mit einer kugelförmigen Linse offenbar. Weiterhin ist aus der DE 195 22 546 C2 eine Nahfeldoptik mit einer konisch zulaufenden Glasfaser bekannt, die eine Metallummantelung und in einem Abstand dazu eine Metallspitze trägt.

Der Stand der Technik, von dem die vorliegende Erfindung ausgeht, wird in der DE 38 37 389 C1 beschrieben. Die hieraus bekannte Nahfeldoptik für elektromagnetische Strahlung im infraroten Spektralbereich dient der Übertragung der Strahlung zwischen einem Bereich großen Querschnitts (Einfallsbereich der Strahlung in die Nahfeldoptik), der eine im Wesentlichen ungehinderte Ausbreitung der Strahlung zulässt, und einer im Vergleich zur Wellenlänge der Strahlung kleinen Endbereich, durch den die konzentrierte bzw. fokussierte Strahlung in Richtung auf die zu untersuchende Probe hindurchgeführt wird. Dazu weist die bekannte Nahfeldoptik einen metallischen Hohlraumwellenleiter mit einem runden Querschnitt mit einer großen Eingangsapertur mit dem Durchmesser D und einer kleinen Ausgangsapertur mit dem Durchmesser s auf. Der Außendurchmesser des Hohlraumwellenleiters ist bei der bekannten Nahfeldoptik konstant, der Innendurchmesser nimmt in Richtung auf die Ausgangsapertur stetig ab, sodass im Innern des Hohlraumwellenleiters ein Trichter entsteht. Vor und in der Ausgangsapertur ist im Trichter ein doppelkegelförmiges Dielektrikum angeordnet, das eine Fokussierungseinrichtung trägt, die im Eingangsbereich des Hohlraumwellenleiters als Antenne und in dessen Ausgangsbereich als Wellenleiter ausgebildet ist. Dabei kann die Antenne in Richtung der einfallenden Strahlung umgebogen sein, sodass eine gewisse Anpassung beim Strahlungsempfang erreicht wird.

Der Hohlraumwellenleiter an sich mit einem konischen Innenverlauf würde ein cut-off-Verhalten zeigen. Strahlung mit einer Wellenlänge größer als die cut-off-Wellenlänge, deren Größenordnung sich aus dem entsprechenden Querschnitt des Hohlraumwellenleiters ergibt, könnte nicht propagieren. Durch das Vorsehen eines zentralen Wellenleiters als Fokussierungseinrichtung, der mit der Innenwandung der Hohlraumwellenleiters bzw. der Ausgangsapertur einen Koaxialwellenleiter bildet, werden bei der bekannten Nahfeldoptik derartige cut-off-Effekte vermieden. Dabei wird jedoch die räumliche Fokussierungsmöglichkeit für die Strahlung durch den Durchmesser der Ausgangsapertur mit dem Durchmesser s begrenzt. In der DE 38 37 389 C1 wird zwar ausgeführt, dass durch mikromechanische Fertigung eine Ausgangsapertur mit dem Durchmesser s von 1 µm fertigbar wäre, im Ausführungsbeispiel wird dann jedoch eine Ausgangsapertur mit dem Durchmesser s von 5 µm angeführt. Dabei bestimmt der Abstand des zentralen Wellenleiters zur Innenwandung der Ausgangsapertur die Ausprägung des Nahfeldes. Die mikromechanische Fertigung derartig kleiner Öffnungen und die elektrisch isolierte Positionierung des Wellenleiters zentral in der Ausgangsapertur sind jedoch sehr aufwändig und fehlerbehaftet. Weiterhin kann bei der bekannten Nahfeldoptik Strahlung, die nicht auf dem zentralen Wellenleiter, sondern frei im Hohlraumwellenleiters propagiert und eine Wellenlänge in der Größenordnung der cut-off-Wellenlänge besitzt, als Streustrahlung durch die Ausgangsapertur propagieren.

### Aufgabenstellung und Lösung

Die **Aufgabe** für die vorliegende Erfindung ist daher darin zu sehen, die gattungsgemäße Nahfeldoptik der eingangs beschriebenen Art dahingehend im Sinne einer einfachen und weitgehend fehlerfreien Herstellbarkeit weiterzubilden, dass eine räumlich sehr starke Fokussierung für die Strahlung erreicht ist, die nicht abhängig von der Größe des Durchmessers s der Ausgangsapertur ist. Dabei soll Streustrahlung weitgehend unterdrückt werden. Die erfindungsgemäße **Lösung** für diese Aufgabe ist dem Hauptanspruch zu entnehmen. Vorteilhafte Weiterbildungen der Erfindung sind den Unteransprüchen zu entnehmen und werden nachfolgend im Zusammenhang mit der Erfindung näher erläutert.

Bei der erfindungsgemäßen Nahfeldoptik ist die Fokussierungseinrichtung durchgängig als Zweidrahtwellenleiter ausgebildet, die die eingefangene Strahlung nahezu dispersionsfrei durch die Ausgangsapertur transferiert. Im Antennenbereich auf der Eingangsseite der Nahfeldoptik weist sie zwei eng benachbarte Antennendrähte auf. Im Bereich des Wellenleiters auf der Ausgangsseite der Nahfeldoptik weist die Fokussierungseinrichtung zwei Wellenleiterdrähte auf, die zumindest im Bereich der Ausgangsapertur einen Abstand kleiner als eine ausgewählte Wellenlänge der einfallenden elektromagnetischen Strahlung und auch kleiner als der Durchmesser s der Ausgangsapertur zueinander haben. Durch die Ausbildung der Fokussierungseinrichtung als Zweidrahtwellenleiter propagiert die einfallende Strahlung wesentlich über die beiden Wellenleiterdrähte und nicht mehr auch über die Innenseite des Hohlraumwellenleiters. Die Ausbildung des Nahfeldes bezüglich seiner Intensität und lateralen Auflösung am Ausgang der Anordnung ist somit nur abhängig vom Abstand der beiden Wellenleiterdrähte zueinander. Der Querschnitt der Ausgangsapertur kann unabhängig davon in einer einfach herstellbaren Größe dimensioniert werden. Der Abstand der beiden Wellenleiterdrähte ist zumindest im Bereich der Ausgangsapertur einzuhalten. Die Antennendrähte im Eingangsbereich der Nahfeldoptik können einen größeren Abstand zueinander aufweisen, sodass die beiden Drähte des Zweidrahtwellenleiters im Verlauf des Hohlraumwellenleiters aufeinander zulaufen. Dies ist aber in der technischen Umsetzung, insbesondere bei einem angewendeten Schichtenverfahren, aufwändiger zu realisieren. In der Regel verlaufen daher beide Drähte des Zweidrahtwellenleiters über dessen gesamte Länge parallel zueinander in Ihrem Abstand im Bereich der Ausgangsapertur.

Weiterhin ist bei der erfindungsgemäßen Nahfeldoptik die Ausgangsapertur als Kanal mit einem konstanten Querschnitt einer wählbaren Länge L ausgebildet. Dabei ist die Länge L kleiner als der Durchmesser s der Ausgangsapertur bzw. des Kanals. Dadurch wird das Propagieren von nicht auf dem Zweidrahtwellenleiter befindlichen Strahlungsmoden durch das aufgrund des Querschnittes der Ausgangsapertur vorgegebenen cut-off-Verhalten unterdrückt. Damit steht auf der Ausgangsseite der Nahfeldoptik nach der Erfindung nur eingefangene und konzentrierte Strahlung in einer hohen Intensitätsdichte zur Verfügung, die über den Zweidrahtwellenleiter propagiert. Streustrahlung über freie Ausbreitung innerhalb des Kanals der Ausgangsapertur wird vermieden.

Das Spektrum des Nahfeldes wird durch das Frequenzband der eingefangenen Strahlung bestimmt. Vorteilhaft ist es daher, wenn jeder Antennendraht des Zweidrahtwellenleiters im Eingangsbereich der Nahfeldoptik als Breitbandantenne ausgebildet ist. Innerhalb des ankommenden infaroten Spektralbereichs (insbesondere THz- und Sub-THz-Bereich) kann somit ein möglichst breites Spektralband eingefangen werden. Dafür können besonders vorteilhaft die Antennendrähte als logarithmisch-periodische Dipolantennen mit einzelnen Dipolelementen ausgebildet werden. Weiterhin können zur Verbesserung der Breitbandigkeit die Dipolelemente der übereinander liegenden Antennendrähte komplementär zueinander angeordnet sein. Die einzelnen Dipolelemente können dem Verlauf der Innenwandung des Hohlraumwellenleiters angepasst sein. Andere Anordnungs- und Verlaufsformen sind jedoch auch ohne weiteres möglich.

Dipolantennen sind für andere Frequenzbereiche aus dem Stand der Technik, beispielsweise auf dem Gebiet der Nachrichtentechnik (vergleiche GB 1,066,151 für eine logarithmisch, periodische Antenne oder GB 591,053 für eine frühe Hochfrequenzantenne mit definierten Öffnungen und Reflexionseinrichtungen sowie einer Zweidrahtzuleitung), bekannt. Bei einer logarithmisch-periodischen Dipolantenne werden Dipolelemente ähnlich wie bei fraktalen Strukturen mit einem bestimmten geometrischen Verhältnis ε skaliert und angeordnet. Der Wert ε ist gegeben durch ε = Rₙ₊₁/Rₙ, wobei Rₙ₊₁ und Rₙ die Abmessungen von zwei aufeinander folgenden Dipolelementen aus n Dipolelementen darstellen. Bei einer logarithmisch-periodischen Dipolantenne als Array aus einzelnen Dipolelementen gilt dieses Verhältnis sowohl für die Längen der Dipolelemente als auch für die Abstände zwischen den Dipolelementen bzw. für die Abstände der Dipolelemente vom Antennenursprung. Die Skalierung ist durch diskrete Verhältnisse εⁿ festgelegt, wodurch die Periodizität bestimmt wird. Die Grenze zwischen Periodizität und Frequenzunabhängigkeit der Dipolantenne ist abhängig von den verwendeten Dipolelementen, deren Bandbreite und von den Anforderungen an die Dipolantenne.

Neben der Herstellung der Ausgangsapertur zeigt sich auch die Positionierung der Fokussierungseinrichtung im Hohlraumwellenleiter als technische Herausforderung. Die Fixierung kann jedoch in einfacher Weise erfolgen, wenn das Dielektrikum als dünne, starre Trägerschicht ausgebildet und im Längsschnitt des Hohlraumwellenleiters angeordnet ist. Das Dielektrikum ist dann als starre Rippe ausgebildet und durchspannt den Innenraum des Hohlraumwellenleiters im Bereich seines Querschnitts, wobei es an den Verlauf der Innenkontur angepasst sein kann. In ein solches schichtartiges Dielektrikum kann in einfacher Weise die Fokussierungseinrichtung eingearbeitet werden. Dabei ist es von Vorteil, wenn die beiden Antennendrähte und Wellenleiterdrähte übereinander liegend im Dielektrikum angeordnet sind. Ein solcher mikrostrukturierter Schichtaufbau kann beispielsweise mit dem aus dem Stand der Technik bekannten LIGA-Verfahren (Lithographie, Galvanoformung, Abformung) hergestellt werden. Dieses Verfahren bietet den Vorteil, Mikrobauteile mit nahezu beliebigen lateralen Geometrien und großer Strukturhöhe aus den Nicht-Silizium-Materialien Kunststoff, Metall oder Keramik herstellen zu können. Zur Herstellung eines schichtartigen Dielektrikums zum Einsatz bei der Nahfeldoptik nach der Erfindung mit übereinander liegende Antennen- und Wellenleiterdrähten bietet sich die Verwendung des Epoxydharzes SU-8 für den Frequenzbereich kleiner 1 THz (0,3 mm bis 5 mm Wellenlänge) an. Nach dem Aufbau einer polymeren Grundschicht wird der untere Antennendraht mit dem unteren Wellenleiterdraht in einer weiteren polymeren Schicht prozessiert. Danach wird eine polymere Zwischenschicht mit einer Schichtstärke von ungefähr 10 µm prozessiert, wodurch der vertikale Abstand der Drähte zueinander festgelegt wird. Anschließend erfolgen der Aufbau des oberen Antennendrahtes mit dem oberen Wellenleiterdraht in einer weiteren polymeren Schicht und eine polymeren Abschlussschicht. Ein derartig prozessiertes Dielektrikum mit einem vertikalen Drahtabstand von 10 µm kann beispielsweise in einen runden Hohlraumwellenleiter mit einer Austrittsapertur mit einem Durchmesser s = 200 µm durch isolierende Klebung eingefügt werden. Somit kann eine wellenlängenunabhängige Fokussierung der eingefangenen Strahlung auf ein Nahfeld mit einem Durchmesser von ungefähr 7 µm erfolgen. Mit Hilfe anderer photolithographischer Verfahren kann der Abstand zwischen den Drähten im Zweidrahtwellenleiter noch wesentlich kleiner gestaltet werden.

Der innere Querschnitt des Hohlraumwellenleiters kann im Prinzip beliebig gestaltet sein, der Wandungsverlauf kann gerade oder gekrümmt erfolgen. In der Hochfrequenztechnik sind runde, rechteckige und quadratische Querschnitte üblich, da sie sich einfach berechnen lassen. Die Angabe des Durchmessers bezieht sich dann immer auf die größte Raumdiagonale des Querschnitts. Ein runder Konus ist leicht auf einer Drehbank herstellbar. Bei einer weiteren Miniaturisierung des Hohlraumwellenleiters mit dem LIGA-Verfahren sind jedoch rechteckige Strukturen wesentlich einfacher in der Herstellung als runde Strukturen. Durch den Größenunterschied zwischen Eingangs- und Ausgangsapertur ergeben sich damit pyramidale Strukturen. Eine zusätzliche Fokussierung der Strahlung in der Umgebung eines Hohlraumwellenleiters mit rundem Querschnitt auf den Zweidrahtwellenleiter kann erreicht werden, wenn der Hohlraumwellenleiter an seiner Innenseite einen parabolischen Verlauf, insbesondere in Form eines Winston-Konusses, aufweist. Der Winston-Konus ist aus dem Stand der Technik allgemein bekannt. Er hat einen zur Achse winklig angeordneten Parabolverlauf und reflektiert einfallende Strahlung optimal auf die zentrale Achse.

### Ausführungsbeispiel

Eine Ausbildungsform der Nahfeldoptik für elektromagnetische Strahlung im infraroten Spektralbereich mit einem Zweidrahtwellenleiter als Fokussierungseinrichtung nach der Erfindung wird nachfolgend anhand der schematischen Figuren näher erläutert. Dabei zeigt :
- **Figur 1**: einen schematischen Querschnitt durch die Nahfeldoptik in vergrößerter Darstellung und
- **Figur 2**: eine schematische Frontansicht der Nahfeldoptik in vergrößerter Darstellung.

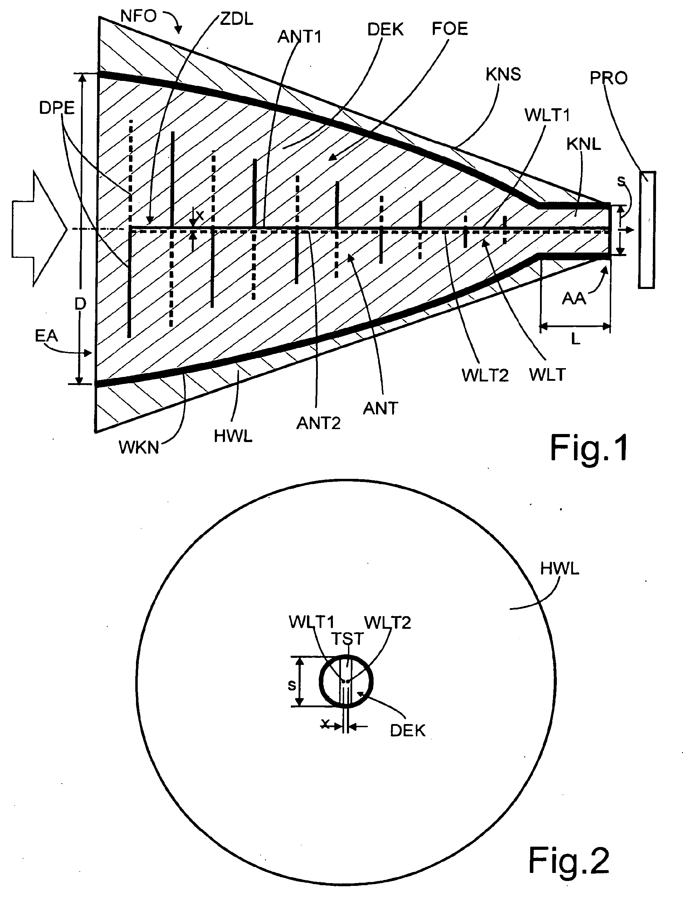

Die **Figur 1** zeigt eine Nahfeldoptik **NFO** für elektromagnetische Strahlung im infraroten Spektralbereich mit einem metallischen, im gewählten Ausführungsbeispiel im Querschnitt runden Hohlraumwellenleiter **HWL.** Dieser weist auf seiner Eingangsseite für die einzufangende Strahlung (großer Pfeil) eine große, die freie Ausbreitung der Strahlung erlaubende Eingangsapertur **EA** mit dem Durchmesser **D** auf. Auf seiner Ausgangsseite vor einer mit der fokussierten Strahlung (kleiner Pfeil) im optischen Nahfeld zu bestrahlenden Probe **PRO** weist der Hohlraumwellenleiter **HWL** eine kleine, die freie Ausbreitung der Strahlung durch cut-off Verhalten verhindernde Ausgangsapertur **AA** mit dem Durchmesser **s** auf. Im Inneren des Hohlraumwellenleiters **HWL** befindet sich eine Fokussierungseinrichtung **FOE,** die im Eingangsbereich des Hohlraumwellenleiters **HWL** als Antenne **ANT** und in dessen Ausgangbereich als Wellenleiter **WLT** ausgebildet und in einem Dielektrikum **DEK** fixiert ist.

Die Fokussierungseinrichtung **FOE** zeigt eine Gestaltung als Zweidrahtwellenleiter **ZDL** mit zwei eng benachbarten Antennendrähten **ANT₁, ANT₂** und zwei Wellenleiterdrähten **WLT₁, WLT₂.** Dabei ist der in der **Figur 1** dargestellte Querschnitt durch die Nahfeldoptik **NFO** so gewählt, dass der obere Antennendraht **ANT₁** und der obere Wellenleiterdraht **WLT₁** in der Ansicht zu erkennen sind. Der isoliert davon darunter liegende Antennendraht **ANT₂** und der darunter liegende Wellenleiterdraht **WLT₂** sind gestrichelt dargestellt. Dabei haben die beiden Wellenleiterdrähte **WLT₁, WLT₂** eine solchen senkrecht zur Zeichenebene verlaufenden Abstand **x** zueinander, der kleiner als eine aus dem einfallenden Infrarotspektrum ausgewählte Wellenlänge ist, sodass ein optisches Nahfeld an der Ausgangsapertur **AA** mit dem Durchmesser **s,** der zwangläufig größer sein muss als der Abstand **x,** auf der Probe **PRO** entsteht. Die Antennendrähte **ANT₁, ANT₂** sind im gewählten Ausführungsbeispiel als logarithmisch-periodische Dipolantennen mit einzelnen Dipolelementen **DPE** ausgebildet. Dabei sind die Dipolelemente **DPE** der übereinander liegenden Antennendrähte **ANT₁, ANT₂** komplementär zueinander angeordnet und dem Verlauf der Innenwandung des Hohlraumwellenleiters **HWL** angepasst. Das Dielektrikum **DEK** ist als dünne, starre Trägerschicht **TST** ausgebildet und isoliert den eingelagerten Zweidrahtwellenleiter **ZDL** gegenüber dem metallischen, elektrisch leitenden Hohlraumwellenleiter **HWL.** Das Dielektrikum **DEK** ist achsenparallel zum Hohlraumwellenleiter **HWL** angeordnet und in seiner Außenkontur dem Verlauf der Innenwandung des Hohlraumwellenleiters **HWL** angepasst. Die Befestigung im Hohlraumwellenleiter **HWL** kann durch einfache Klebung (dicke Linie in **Figur 1** und **2****)** erfolgen.

Bei der wie vorbeschrieben gestalteten Nahfeldoptik **NFO** ist die Propagation der einfallenden Strahlung auf dem Zweidrahtwellenleiter **ZDL** nurmehr anhängig von dem Abstand **x** der beiden Wellenleiterdrähte **WLT₁, WLT₂** zueinander und nicht von der Ausgangsapertur **AA** mit dem Durchmesser **s.** Eine Propagation von Strahlung auf der Innenseite des Hohlraumwellenleiters **HWL** ist weitgehend vermieden. Um zu verhindern, dass dort trotzdem auftretende Streustrahlung durch die Ausgangsapertur **AA** mit dem Durchmesser **s** tritt, ist diese als Kanal **KNL** mit konstantem Querschnitt einer wählbaren Länge **L,** beispielsweise 400 µm, ausgebildet. Dabei ist die Länge **L** des Kanals **KNL** im länger als sein Durchmesser **s.** Durch den von diesen Dimensionen abhängig auftretenden cut-off-Effekt wird ein Austreten von Strahlungsmoden über das Innere des Hohlraumwellenleiters **HWL** vermieden. Zusätzlich wird die einfallende Strahlung über eine Ausprägung der Innenseite des Hohlraumwellenleiters **HWL** in Form eines Winston-Konusses **WKN** mit verkippt parabolischem Wandungsverlauf auf den Zweidrahtwellenleiter **ZDL** fokussiert. Auf seiner Außenseite ist der Hohlraumwellenleiter **HWL** aufgrund seiner rotationssymmetrischen Form als einfacher Konus **KNS** mit linearem Wandungsverlauf ausgebildet.

In der **Figur 2** ist die Nahfeldoptik **NFO** gemäß **Figur 1** aus der Vorderansicht von der Probe **PRO** her dargestellt. Zu erkennen sind der runde Hohlraumwellenleiter **HWL** mit der Ausgangsapertur **AA** mit dem Durchmesser **s,** der beispielsweise 200 µm groß sein kann, und das schichtartige Dielektrikum **DEK** in Form einer dünnen, starren Trägerschicht **TST,** die wie eine zentrale Rippe das Innere des runden Hohlraumwellenleiters **HWL** durchspannt. Im Dielektrikum **DEK** sind vertikal übereinander der Wellenleiterdraht **WLT₁** und der Wellenleiterdraht **WLT₂** des Zweidrahtwellenleiters **ZDL** angeordnet. Der Abstand **x** zwischen beiden kann beispielsweise 10 µm betragen. Mit diesen Abmessungen kann mit der Nahfeldoptik **NFO** eine Konzentration der eingefangenen Strahlung auf ein Nahfeld mit einem Durchmesser von 7 µm im Bereich der Probe **PRO** erreicht werden.

Die genannten Ausführungen sind beispielhaft. Andere Ausführungsformen und Abmessungen, insbesondere ein geringerer Abstand **x** der beiden Drähte im Zweileiterdraht **ZDL** bis in den Bereich einzelner µm und damit ein noch weiter konzentriertes Nahfeld, sind realisierbar.

### Bezugszeichenliste

- **AA**: Ausgangsapertur
- **ANT**: Antenne
- **ANT₁, ANT₂**: Antennendraht

- **D**: Durchmesser Eingangsapertur
- **DEK**: Dielektrikum
- **DPE**: Dipolelement
- **EA**: Eingangsapertur
- **FOE**: Fokussierungseinrichtung
- **HWL**: Hohlraumwellenleiter
- **KNL**: Kanal
- **KNS**: einfacher Konus
- **L**: Länge Kanal
- **NFO**: Nahfeldoptik
- **PRO**: Probe
- **s**: Durchmesser Ausgangsapertur
- **TST**: Trägerschicht
- **WKN**: Winston-Konus
- **WLT**: Wellenleiter
- **WLT₁, WLT₂**: Wellenleiterdraht
- **x**: Abstand im Zweidrahtwellenleiter
- **ZDL**: Zweidrahtwellenleiter

## Patentansprüche

1. Nahfeldoptik für elektromagnetische Strahlung im infraroten Spektralbereich mit einem metallischen Hohlraumwellenleiter vorgegebenen Querschnitts mit einer großen Eingangsapertur, deren Durchmesser D die freie Ausbreitung der Strahlung erlaubt, und einer kleinen Ausgangsapertur, deren Durchmesser s die freie Ausbreitung der Strahlung durch cut-off Verhalten verhindert, und einer im Hohlraumwellenleiter mit einem Dielektrikum fixierten Fokussierungseinrichtung, die im Eingangsbereich des metallischen Hohlraumwellenleiters als Antenne und in dessen Ausgangsbereich als Wellenleiter ausgebildet ist,
**dadurch gekennzeichnet, dass**
die Fokussierungseinrichtung (FOE) durchgängig als Zweidrahtwellenleiter (ZDL) mit zwei eng benachbarten Antennendrähten (ANT₁, ANT₂) und zwei Wellenleiterdrähten (WLT₁, WLT₂), die zumindest im Bereich der Ausgangsapertur (AA) einen Abstand x kleiner als eine ausgewählte Wellenlänge der einfallenden elektromagnetischen Strahlung und kleiner als der Durchmesser s der Ausgangsapertur (AA) zueinander haben, und die Ausgangsapertur (AA) als Kanal (KNL) mit einem konstanten Querschnitt einer wählbaren Länge L, die größer ist als der Durchmesser s der Ausgangsapertur (AA) ist, ausgebildet ist.

2. Nahfeldoptik nach Anspruch 1,
**dadurch gekennzeichnet, dass**
jeder Antennendraht (ANT₁, ANT₂) als Breitbandantenne ausgebildet ist.

3. Nahfeldoptik nach Anspruch 2,
**dadurch gekennzeichnet, dass**
jeder Antennendraht (ANT₁, ANT₂) als logarithmisch-periodische Dipolantenne mit einzelnen Dipolelementen (DPE) ausgebildet ist.

4. Nahfeldoptik nach eine der Ansprüche 1 bis 3,
**dadurch gekennzeichnet, dass**
das Dielektrikum (DEK) als dünne, starre Trägerschicht (TST) ausgebildet und im Längsschnitt des Hohlraumwellenleiters (HWL) angeordnet ist.

5. Nahfeldoptik nach Anspruch 4,
**dadurch gekennzeichnet, dass**
die beiden Antennendrähte (ANT₁, ANT₂) und Wellenleiterdrähte (WLT₁, WLT₂) übereinander liegend im Dielektrikum (DEK) angeordnet sind.

6. Nahfeldoptik nach Anspruch 5,
**dadurch gekennzeichnet, dass**
die Dipolelemente (DPE) der übereinander liegenden Antennendrähte (ANT₁, ANT₂) komplementär zueinander angeordnet sind.

7. Nahfeldoptik nach einem der Ansprüche 1 bis 6,
**dadurch gekennzeichnet, dass**
der Hohlraumwellenleiter (HWL) einen rechteckigen Querschnitt aufweist.

8. Nahfeldoptik nach eine der Ansprüche 1 bis 7,
**dadurch gekennzeichnet, dass**
der Hohlraumwellenleiter (HWL) einen runden Querschnitt und an seiner Innenseite einen parabolischen Verlauf aufweist.

9. Nahfeldoptik nach Anspruch 8,
**dadurch gekennzeichnet, dass**
der parabolische Verlauf in Form eines Winston-Konusses (WKN) ausgebildet ist.

10. Nahfeldoptik nach eine der Ansprüche 1 bis 9,
**dadurch gekennzeichnet, dass**
der Abstand x der beiden Antennendrähte (ANT₁, ANT₂) und Wellenleiterdrähte (WLT₁, WLT₂) mit 10 µm, der Durchmesser s der Ausgangsapertur (AA) mit 200 µm und die Länge L des Kanals (KNL) mit 400 µm bemessen ist.

## Claims

1. Near-field optics for electromagnetic radiation in the infrared spectral range having a metallic hollow waveguide of predetermined cross section having a large entry aperture, whose diameter D permits the free propagation of the radiation, and a small exit aperture, whose diameter s prevents the free propagation of the radiation by means of cut-off behaviour, and a focussing device that is fixed in the hollow waveguide with a dielectric and is formed in the entry region of the metallic hollow waveguide as an antenna and in its exit region as a waveguide,
**characterised in that**
the focussing device (FOE) is formed throughout as a two-wire waveguide (ZDL) with two closely adjacent antenna wires (ANT₁, ANT₂) and two waveguide wires (WLT₁, WLT₂) which at least in the region of the exit aperture (AA) are at a distance x from each other that is smaller than a selected wavelength of the incident electromagnetic radiation and smaller than the diameter s of the exit aperture (AA), and the exit aperture (AA) is formed as a channel (KNL) with a constant cross section of selectable length L that is greater than the diameter s of the exit aperture (AA).

2. Near-field optics according to claim 1,
**characterised in that**
each antenna wire (ANT₁, ANT₂) is formed as a broad-band antenna.

3. Near-field optics according to claim 2,
**characterised in that**
each antenna wire (ANT₁, ANT₂) is formed as a logarithmic-periodic dipole antenna with individual dipole elements (DPE).

4. Near-field optics according to one of claims 1 to 3,
**characterised in that**
the dielectric (DEK) is formed as a thin, rigid carrier layer (TST) and is arranged in the longitudinal section of the hollow waveguide (HWL).

5. Near-field optics according to claim 4,
**characterised in that**
the two antenna wires (ANT₁, ANT₂) and waveguide wires (WLT₁, WLT₂) are arranged so that they lie one on top of the other in the dielectric (DEK).

6. Near-field optics according to claim 5,
**characterised in that**
the dipole elements (DPE) of the antenna wires (ANT₁, ANT₂) lying one on top of the other are arranged in a complementary way with respect to each other.

7. Near-field optics according to one of claims 1 to 6,
**characterised in that**
the hollow waveguide (HWL) has a rectangular cross section.

8. Near-field optics according to one of claims 1 to 7,
**characterised in that**
the hollow waveguide (HWL) has a round cross section and on its inside a parabolic course.

9. Near-field optics according to claim 8,
**characterised in that**
the parabolic course is the form of a Winston cone (WKN).

10. Near-field optics according to one of claims 1 to 9,
**characterised in that**
the distance x between the two antenna wires (ANT₁, ANT₂) and waveguide wires (WLT₁, WLT₂) has a dimension of 10 µm, the diameter s of the exit aperture (AA) has a dimension of 200 µm and the length L of the channel (KNL) has a dimension of 400 µm.

## Revendications

1. Optique de champ proche pour un rayonnement électromagnétique dans la plage spectrale de l'infrarouge ayant un guide d'onde à cavité creuse métallique de section prédéfinie avec une grande ouverture d'entrée dont le diamètre (D) permet le traitement libre du rayonnement et une petite ouverture de sortie dont le diamètre (s) évite le développement libre du rayonnement par un comportement de coupure, et d'une installation de focalisation fixée dans le guide d'onde à cavité creuse avec un diélectrique, cette installation étant réalisée dans le domaine d'entrée du guide d'onde à cavité creuse métallique comme antenne et dont la zone de sortie est réalisée comme guide d'onde,
**caractérisée en ce que**
l'installation de focalisation (FOE) est réalisée de façon continue comme guide d'onde à deux fils(ZDL) formé de deux fils d'antenne (ANT₁, ANT₂) étroitement rapprochés et de deux fils de guide d'onde (WLT₁, WLT₂), qui, au moins dans la zone de l'ouverture de sortie (AA) ont un écartement (x) inférieur à une longueur d'onde choisie du rayonnement électromagnétique incident et inférieur au diamètre (s) de l'ouverture de sortie (AA) et l'ouverture de sortie (AA) est réalisée comme canal (KNL) de section constante, de longueur sélectionnée (L) supérieure au diamètre (s) de l'ouverture de sortie (AA).

2. Optique de champ proche selon la revendication 1,
**caractérisée en ce que**
chaque fil d'antenne (ANT₁, ANT₂) est réalisé sous la forme d'une antenne à bande large.

3. Optique de champ proche selon la revendication 2,
**caractérisée en ce que**
chaque fil d'antenne (ANT₁, ANT₂) est une antenne dipolaire périodique, logarithmique, avec des éléments dipolaires distincts (DPE).

4. Optique de champ proche selon les revendications 1 à 3,
**caractérisée en ce que**
le diélectrique (DEK) est réalisé sous la forme d'une mince couche de support (TST), rigide et cette couche est prévue dans la section longitudinale du guide d'onde à cavité creuse (HWL).

5. Optique de champ proche selon la revendication 4,
**caractérisée en ce que**
les deux fils d'antenne (ANT₁, ANT₂) et les fils de guide d'onde (WLT₁, WLT₂) sont superposés dans le diélectrique (DEK).

6. Optique de champ proche selon la revendication 5,
**caractérisée en ce que**
les éléments de dipôle (DPE) des fils d'antennes (ANT₁, ANT₂) superposés sont disposés de manière complémentaire l'un par rapport à l'autre.

7. Optique de champ proche selon les revendications 1 à 6,
**caractérisée en ce que**
le guide d'onde à cavité creuse (HWL) a une section rectangulaire.

8. Optique de champ proche selon les revendications 1 à 7,
**caractérisée en ce que**
le guide d'onde à cavité creuse (HWL) a une section circulaire et son côté intérieur a un tracé parabolique.

9. Optique de champ proche selon la revendication 8,
**caractérisée en ce que**
le tracé parabolique correspond à un cône de Winston (WKN).

10. Optique de champ proche selon les revendications 1 à 9,
**caractérisée en ce que**
la distance (x) des deux fils d'antenne (ANT₁, ANT₂) et des fils guide d'onde (WLT₁, WLT₂) correspond à 10 µm, le diamètre (s) de l'ouverture de sortie (AA) correspond à 200 µm et la longueur (L) du canal (KNL) correspond à 400 µm.
